# EUROPÄISCHE PATENTSCHRIFT

(11) **EP 1 787 538 B1**
(45) Veröffentlichungstag und Bekanntmachung des Hinweises auf die Patenterteilung: **20.05.2009**
(21) Anmeldenummer: 05110968.4
(22) Anmeldetag: 18.11.2005
(51) Int. Cl.: A42B 3/04

(54) **Helmhalterung für ein Sichtgerät, insbesondere für ein Nachtsichtgerät**
Helmet fixing for an optical device, particularly for night-sights
Support pour monter un dispositif optique, en particulier un dispositif de vision nocturne, sur une casque

(43) Veröffentlichungstag der Anmeldung: 23.05.2007
(73) Patentinhaber: Vectronix AG, 9435 Heerbrugg (CH)
(72) Erfinder: Grübel, Edwin, 9443 Widnau (CH); Müller, Wolfgang J., 6890 Lustenau (AT); Vith, Manfred, 6833 Klaus (AT)
(74) Vertreter: Büchel, Kaminski & Partner

(56) Entgegenhaltungen:
- US-A- 4 689 834
- US-A- 5 471 678
- US-A- 5 856 811
- US-A- 5 914 816
- US-A1- 2002 120 979

## Beschreibung

Die Erfindung betrifft eine Helmhalterung für ein Sichtgerät, insbesondere für ein Nachtsichtgerät, nach dem Oberbegriff des Anspruchs 1.

Diverse Sichtgeräte, so z.B. Nachtsicht- oder Wärmebildgeräte, werden für ganz bestimmte Anwendungen von Militär-, Polizei- und Grenzschutzkräften verwendet, um Einsätze bei schlechten Sicht- oder Lichtverhältnissen oder Dunkelheit ausführen zu können. Nachtsichtgeräte beispielsweise verstärken das Restlicht und erzeugen ein für das menschliche Auge sichtbares Bild.

Nachtsichtgeräte können wie ein Fernglas unabhängig und händisch benützt werden. Sie kommen - wie Ferngläser - als binokulare Ausführung mit getrennten Okularen für jedes Auge oder als monokulare Ausführung mit nur einem Okular zum Einsatz.

In den meisten Fällen, man denke an militärische oder auch polizeiliche Benutzung, ist es erforderlich, dass der Benutzer seine Hände frei hat und das Sichtgerät, beispielsweise ein Nachtsichtgerät, am Kopf des Benutzers fest positioniert ist, so an einer Kopfbedeckung, vorzugsweise einem Helm, befestigt ist.

Je nach Lichtverhältnissen wird das Nachtsichtgerät in einer Arbeitsposition vor dem Auge des Benützers verwendet oder in einer Ruheposition, in der das Nachtsichtgerät außerhalb des Sichtfeldes des Benutzers gehalten wird. Zur Anpassung an die unterschiedlichen Kopfformen und Augenpositionen des Benutzers sind Verstellmechanismen erforderlich, die dem Benutzer die Anpassung an seine persönlichen Bedürfnisse gestatten.

In vielen Einsatzfällen ist der Benutzer darauf angewiesen, auch bei extremen körperlichen Bewegungen, wie Laufschritt, Sprüngen, oder bei Erschütterungen bei Fahrten ein stets ruhiges Bild zu erhalten; das Okular des Sichtgerätes sollte nur eine minimale Relativbewegung ausführen können. Bei anderen Anwendungen ist der Benutzer darauf angewiesen, dass das Nachtsichtgerät sowohl in der Arbeits- als auch in der Ruhestellung in einer dem Kopf sehr nahe liegenden Position gehalten wird und den Kopf des Benutzers weder in horizontaler, aber insbesondere auch nicht vertikaler, Richtung, wesentlich überragt.

Einfache Helmbefestigungen sind bekannt, wie beispielsweise aus der US-4,457,461, die aber keine Möglichkeit zeigen, bei ausreichenden Lichtverhältnissen das Nachtsichtgerät aus dem Sichtfeld entfernen zu können, ohne es umständlich abnehmen zu müssen.

Zur Beseitigung dieses Mangels werden Systeme mit Schwenkmechanismen gebaut. Eine beispielhafte Ausführung dieser Art ist in der DE-69321 234 offenbart. Beim dort gezeigten System wird das Nachtsichtgerät mittels Verbindungsstück an einem Schlitten befestigt, der mittels Schwenkbeschlag mit dem an der Kopfbedeckung durch eine Strebe befestigten Beschlag um eine Schwenkachse drehbar befestigt ist. Die Fixierung der Arbeits- und Ruheposition wird durch eine federbelastete Einrastvorrichtung bewirkt.

Nachteilig erweist sich bei solchen Anordnungen, dass die den Achsschaft aufweisende Strebe eine Drehachse oberhalb der vorderen Helmkante bildet, wodurch in der Ruhestellung das Nachtsichtgerät die Körperhöhe des Benutzers recht beträchtlich überragt. Durch diesen Umstand besteht große Beschädigungsgefahr beim Durchgang durch Türstöcke oder andere, die Durchgangshöhe begrenzende Hindernisse, auch ist die Verwendung in niedrigen Räumen, wie in Fahrzeugkabinen, stark eingeschränkt.

Die US 5,914,816 und die US 2002/0120979 A1 zeigen jeweils eine Helmhalterung für ein Nachtsichtgerät auf, bei denen eine Aufnahme an einem Ausleger schwenkbar gelagert ist. Zur Fixierung der Aufnahme in einer Arbeits- und einer Ruhestellung ist eine Anordnung vorgesehen, bei der Kugeln in Nuten eines Drehelements eingreifen, die eine Sperrung bewirken. Die Kugeln werden durch Federn angedrückt.

Aus der US 5,471,678 geht eine weitere aufklappbare Helmhalterung für ein Nachtsichtgerät hervor. Das Nachtsichtgerät ist ein einer Arbeits- und einer Ruhestellung arretierbar. Hier zu ist ein Mechanismus vorgesehen mit einer konzentrisch zu einer Drehachse angeordneten Feder.

Mit der US 4,689,834 gehört eine Halterung für eine Nachtsichtgerät zum Stand der Technik, die einen Schnellauslösemechanismus aufweist. Das Nachtsichtgerät kann an der Halterung verstellbar befestigt werden, um den physiognomischen Gegebenheiten des Benutzers Rechnung zu tragen.

Um eine gut bewegliche Lagerung um die Schwenkachse zu erhalten, wird ein gewisses Spiel zwischen den Bauteilen benötigt, dies ist in gleicher Weise zum Schutz vor Verklemmungen zwischen den Bauteilen von federbelasteten Einrastvorrichtungen nötig. Aufsummiert ergibt dies, in den Rastpositionen, vornehmlich in der Arbeitsstellung des Sichtgeräts, verstärkt durch den langen Hebelarm des von der Schwenkachse relativ weit entfernten Okular, eine Instabilität im Bereich von einigen Zehntelmillimetern. Bei schnellem Laufschritt oder bei Erschütterungen entsteht durch Masseträgheit eine Relativbewegung zwischen dem Auge des Benutzers und dem Okular, was zu einem instabilen Bild führt.

Ein weiterer Nachteil besteht darin, dass die Rastfedern die Federkraft nur im unmittelbaren Bereich der Arbeits- und Ruhestellung ausüben, ein Gewichtsausgleich des Nachtsichtgerätes erfolgt nicht. Bei plötzlichem Ausklinken der Rastung in der Ruhestellung durch äussere Einwirkungen, wie Anstossen oder bei Sprüngen, kann das Nachtsichtgerät durch das Eigengewicht mit gegebenenfalls grosser Geschwindigkeit von der Ruhestellung in die Arbeitsstellung fallen, was zu Irritationen und Erschrecken des Benutzers, bei losem Sitz des Helmes sogar auch zu Augenverletzungen führen kann.

Um den Nachteil des Standes der Technik zu beheben, ist eine Aufgabe der vorliegenden Erfindung dadurch gegeben, eine Halterung für ein Sichtgerät zu Verfügung zu stellen, so dass das Sichtgerät, insbesondere Nachtsichtgerät, derart gehalten wird, dass - bei jeglichem Einsatz - ein ruhiges, möglichst vibrationsfreies Bild erhalten wird. Weiters, bzw. alternativ, soll, sowohl in Ruhe- als auch in Arbeitsstellung, eine kompakte Anordnung des Sichtgerätes möglich werden. Weiters, bzw. alternativ, soll das Sichtgerät auch in Ruhestellung - selbst bei stossartigen Einwirkungen - möglichst zuverlässig fest gehalten bleiben, so dass ein ungewolltes, den Benutzer gegebenenfalls in Erschrecken versetzendes, plötzliches Herumschwenken des Sichtgerätes in die Arbeitsstellung vermeidbar wird. Weiters sollen insbesondere abrupte Bewegungen des Sichtgeräts, wenigstens solche aus der Ruhe- in die Arbeitslage, gedämpft werden.

Diese Aufgabe wird durch eine Halterung zur Befestigung zumindest eines Sichtgerätes mit den Merkmalen von Patentanspruch 1 gelöst. Alternative bzw. vorteilhafte Ausbildungen sind durch die Kennzeichen der abhängigen Ansprüche beschrieben.

Erfindungsgemäss ist durch den Einbau, die Anordnung und die Auslegung einer Federmechanik eine Spielfreiheit des Systems Halterung-Sichtgerät sichergestellt. Hierbei ist eine Feder einenends an einem Drehelement exzentrisch zu einer Drehachse, um welche die Schwenkbewegung erfolgt, befestigt. Die möglichen Spiele werden durch Federkraft so vorgespannt, dass bis zur Überwindung dieser Kraft alle Spiele nicht wirksam werden, da der Formschluss aller Teile durch das von der Federkraft bewirkte Zusammendrücken der Spalte zwischen den einzelnen Bauteilen vollständig erhalten bleibt.

Wird dem am Ausleger angeordneten Drehelement, das mit der Aufnahme für das Sichtgerät drehfest verbunden ist, ein Dämpfungselement zugeordnet, so wird bei Bewegung des Sichtgeräts - wenigstens bei Bewegung aus der Ruhe- in die Arbeitsstellung - dessen Bewegungsgeschwindigkeit wenigstens über einen Teilbereich der Bewegung reduziert. So werden Erschrecken oder Irritationen bzw. sogar mögliche Verletzungen des Benutzers aufgrund unkontrolliert hastiger Handhabung des Sichtgeräts oder aufgrund von durch äussere Einwirkungen veranlasstes, ungewolltes Umschwenken des Geräts vermeidbar. Die Bewegung erfolgt verlangsamt und gedämpft, ohne den Benutzer emotional oder physisch zu beeinträchtigen.

Solche Dämpfungselemente werden erfindungsgemäss insbesondere in Kombination mit der Federmechanik vorgesehen, im wesentlichen in Parallellage, können aber auch in vorteilhafter Weise für sich alleine bei bekannten Halterungen zum Einsatz kommen, solcherart abrupte Bewegungen von Sichtgeräten aus einer bestimmten Lage - im allgemeinen der Ruhelage - in eine andere Lage - im allgemeinen die Arbeitslage - gezielt dämpfend.

Die Federmechanik ist zudem so dimensioniert, dass ein zumindest teilweiser Gewichtsausgleich aller bewegten Teile erfolgt.

Zur Begrenzung der Schwenkbewegung und somit zum Festlegen der End-Arbeitslage des Sichtgerätes vor dem Auge des Benutzers ist ein Anschlagelement vorgesehen, über dessen Verstellung der horizontale Abstand des Okulars des Sichtgeräts vom Auge des Benutzers in einem gewissen Bereich eingestellt werden kann.

Die Einstellelemente, über die die Position des Sichtgerätes in Bezug auf die Augenlage eines den Helm tragenden Benutzers festgelegt werden können, sind solcherart ausgebildet, dass die Überragung von Teilen des Sichtgeräts über die Kopfhöhe in Ruheposition minimiert wird. Dies wird durch ineinander greifendes Verschachteln der die vertikale und die horizontale Einstellung bewirkenden Elemente erreicht.

Im Folgenden wird die Erfindung anhand einer Ausführungsform rein beispielhaft näher beschrieben.

Es zeigen:
- **Fig. 1**:: einen auf dem Kopf eines Benutzers angebrachten Helm mit einer ein monokulares Nachtsichtgerät tragenden, erfindungsgemässen Halterung; das Nachtsichtgerät befindet sich in Arbeitsstellung vor dem Auge des Benutzers;
- **Fig. 2**:: eine Darstellung entsprechend Fig.1; das Nachtsichtgerät ist vom Auge des Benutzers weg hochgeschwenkt, es befindet sich in Ruhestellung;
- **Fig. 3**:: eine Ansicht der Halterung in Arbeitsstellung von schräg unten (vom Benutzer aus gesehen);
- **Fig. 4**:: eine der Fig. 3 entsprechende Ansicht der Halterung in Arbeitsstellung von schräg oben (vom Benutzer aus gesehen);
- **Fig. 5**:: eine Schnittansicht der Halterung in Arbeitsstellung;
- **Fig. 6**:: Eine Schnittansicht der Halterung in Ruhestellung;
- **Fig. 7:**: einen Detailschnitt entsprechend Fig. 6;
- **Fig. 8:**: eine zu Fig. 5 senkrechte Schnittansicht;
- **Fig. 9:**: eine schematische Seitenansicht der Halterung mit angedeutetem Helm und Kopf des Benutzers;
- **Fig.10 bis 13:**: Ausbildungsvarianten für Federmechanismen;
- **Fig. 14 und 15**:: Ausbildungsvarianten für Dämpfungselemente.

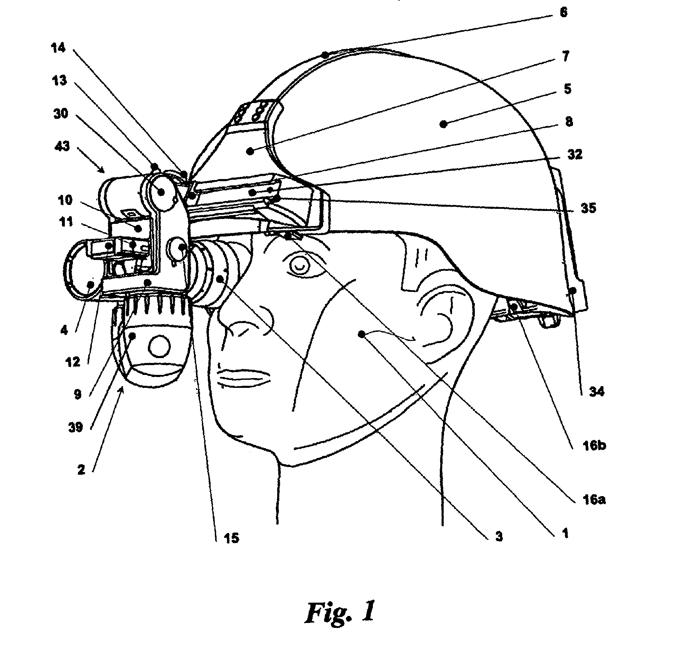

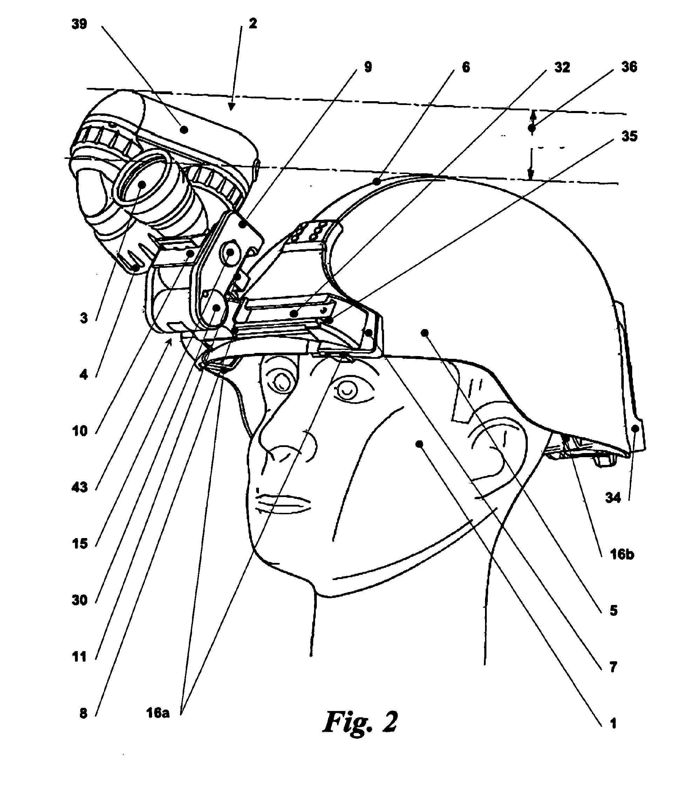

In **Fig. 1** und **Fig. 2** ist eine erfindungsgemässe Halterung für ein Sichtgerät, hier rein beispielhaft ein monokulares Nachtsichtgerät **2**, dargestellt, die an einer als Helm **5** ausgebildeten Kopfbedeckung eines Benutzers **1** angeordnet ist. Das Nachtsichtgerät **2** ist in **Fig. 1** in Arbeitsstellung mit dem Okular **3** des Nachtsichtgeräts **2** vor dem Auge des Benutzers **1** positioniert, in **Fig. 2** ist es in Ruhestellung, aus dem Sichtfeld des Benutzers **1** weggeschwenkt, gezeigt. An dem Rand des Helms **5** ist ein plattenförmiges Tragelement **7** mit hakenförmigen Haltebügeln **16a** gehalten, und über ein Spannband **6** mit einer zur Aufnahme von beispielsweise Batterien, Interfaces und/oder Regeleinheiten vorgesehenen Zusatzgeräteeinheit **34** verbunden, die wiederum durch hakenförmige Haltebügel **16b** an dem Helm **5** festgelegt ist. Die Verzurrung durch Spannung des Spannbandes **6** erfolgt in der Zusatzgeräteeinheit **34** und wird hier nicht näher beschrieben.

In einer an dem Tragelement **7** vorgesehenen Quernut **35** ist seitlich verschiebbar ein Ausleger **8** eingesetzt, den eine Spannschraube für die Seitenverstellung **14** in der vom Benutzer **1** gewünschten Position fixiert. Die Position des Auslegers **8** ist wahlweise - wie hier dargestellt - über dem rechten Auge oder alternativ in einer zweiten Aufnahmeposition **32** über dem linken Auge fixierbar. Auch die Verwendung von zwei Auslegern **8** mit Schwenkmechanismus **43** und Einstellelementen **10, 11** zur Verwendung von zwei Nachtsichtgeräten **2** ist möglich. Ebenso könnte ein einziger Ausleger bei mittiger Anordnung in der Quernut zur Aufnahme eines binokularen Sichtgeräts vorgesehen sein.

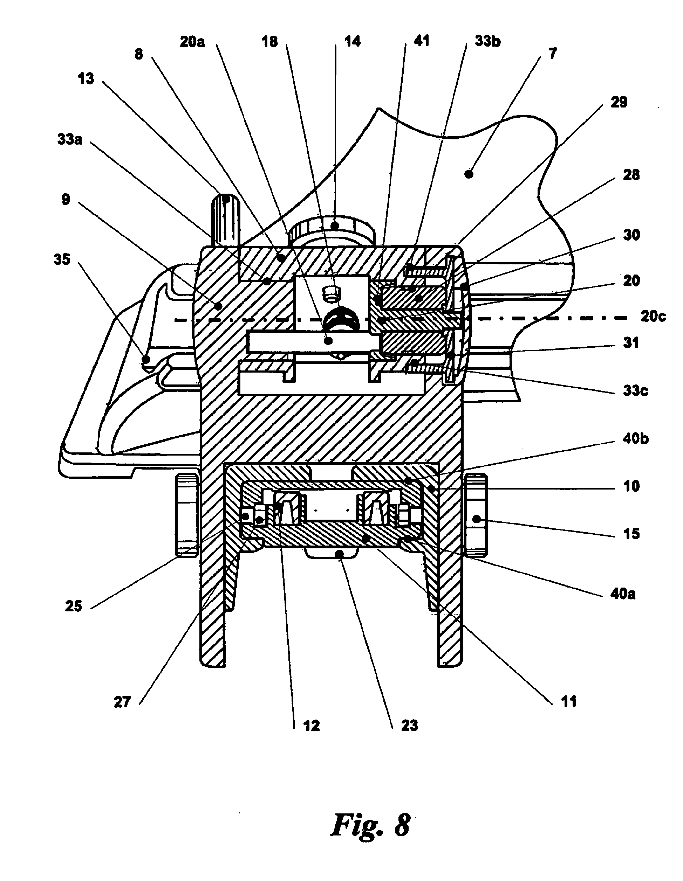

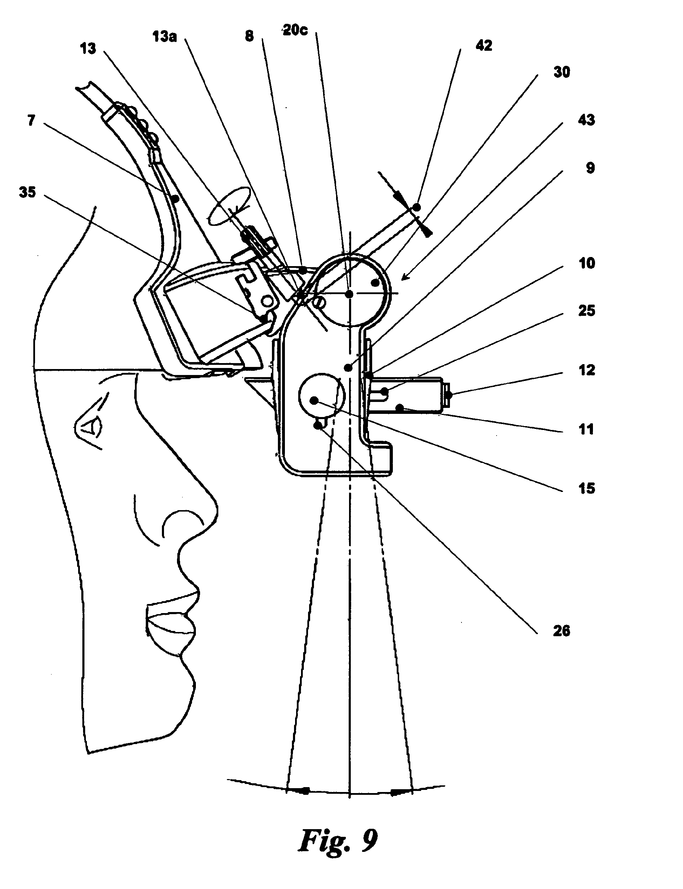

Der Ausleger **8** trägt eine drehbar gelagerte Aufnahme **9**, an die das Nachtsichtgerät **2** angekoppelt werden kann. In der Aufnahme **9** ist ein in Arbeitslage vertikal verstellbares, erstes Einstellelement **10** verschiebbar eingesetzt, das die vertikale Positionierung des Nachtsichtgeräts **2** in Bezug auf die Augenlage des den Helm **5** tragenden Benutzers **1** ermöglicht und weiters ein zweites Einstellelement **11** zur horizontalen Positionierung des Nachtsichtgeräts **2** in Bezug auf die Augenlage des Benutzers **1**. Beide Einstellelemente **10, 11**, werden mittels Spannschrauben **15**, die durch Langlöcher **26** (s. **Fig. 9**) im ersten Einstellelement **10** und Langlöcher **25** (s. **Fig. 8**) im zweiten Einstellelement **11** ragen und mit je einer Mutter **27** (s. **Fig. 8**) verspannt sind, in der vom Benützer gewünschten Position fixiert.

Am zweiten Einstellelement **11** wird über einen Druckknopf **12** das Nachtsichtgerät **2** lösbar befestigt.

Das Nachtsichtgerät **2**, hier beispielhaft dargestellt, besteht im Wesentlichen aus einem einen Restlichtverstärker umfassenden Grundkörper **39**, einem Objektiv **4** und einem Okular **3**.

In **Fig. 2** ist die in Ruhestellung geringe Überragung **36** des Nachtsichtgerätes **2** über die Helm **5** gezeigt. Dies mag zwar einerseits durch die exemplarisch vorteilhafte Faltung der optischen Baugruppe des Nachtsichtgeräts des in **Fig.1** und **2** beispielhaft dargestellten Nachtsichtgeräts gegeben sein, ist jedoch andererseits - erfindungsgemäss - durch die kompakt-kombinierte Anordnung der beiden Einstellelemente **10, 11** mit dem Schwenkmechanismus **43** für jedwegliches - auch konventionelles - Sichtgerät zweckdienlich.

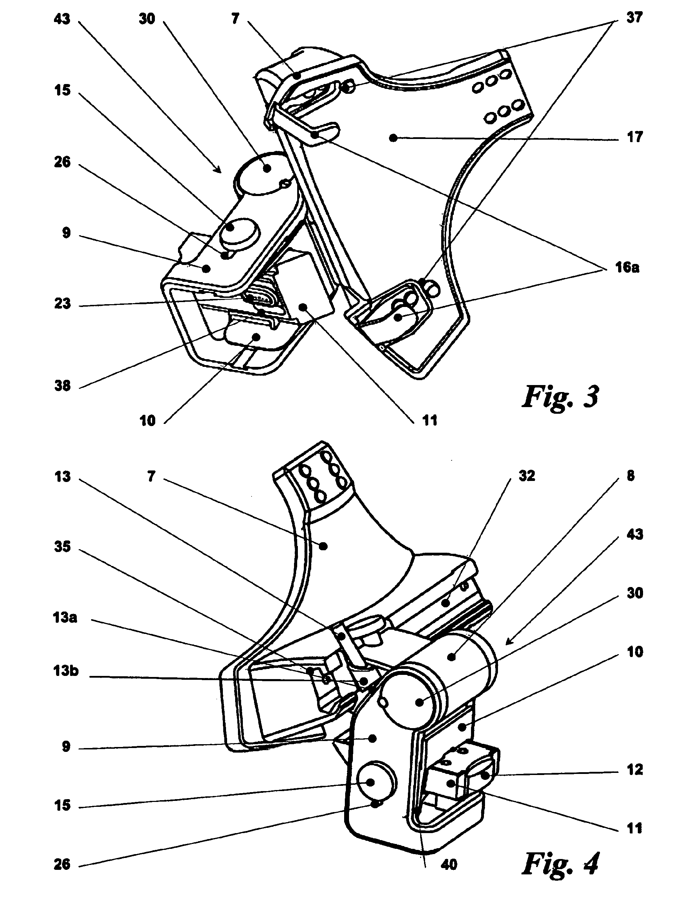

**Fig. 3** zeigt das Tragelement **7** mit den Haltebügeln **16a** sowie Abstandshalter **37**, die die Auflage des Tragelements **7** zum in dieser Darstellung nicht gezeigten Helm definieren. Zur inneren Abdeckung und gegebenenfalls Versteifung des Tragelements **7** ist eine Schutzabdeckung **17** vorgesehen. Die beiden Einstellelemente **10, 11** mit ihrer ineinander geschachtelten Anordnung innerhalb der Aufnahme **9** sind gut zu ersehen. Das Nachtsichtgerät **2** kann an/in ein am zweiten Einstellelement **11** vorgesehenes Aufnahmeteil **38** mit einem Ankoppelteil **23**, die die mechanische und elektrische Verbindung des Nachtsichtgerätes **2** mit der Halterung gewährleisten sollen, gekoppelt werden.

In **Fig. 4** ist die Anordnung eines Anschlagelements **13** gezeigt, das die Schwenkbewegung der Aufnahme **9** um den Ausleger **8** begrenzt. Das Anschlagelement **13** ist an dem Tragelement **7** angeordnet, in Form eines höhenverstellbaren Bolzens. Das untere, aus der Halterung **13b** des Anschlagelements **13** gegen die Aufnahme **9** gerichtete Ende **13a** des Anschlagelements **13** wird, je nach Erstreckung, die Schwenk-End-Lage der Aufnahme **9** in Arbeitsstellung bestimmen, wie weiter unten näher dargestellt.

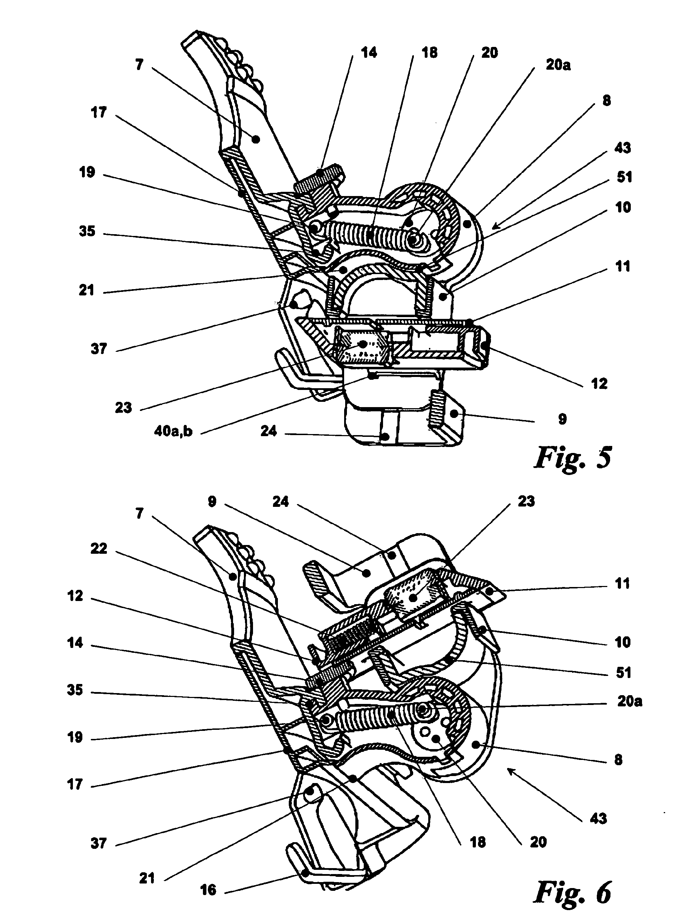

**Fig. 5** und **Fig. 6** zeigen einen Schnitt durch Teile der Helmhalterung, wobei **Fig. 5** die Arbeitsstellung und **Fig. 6** die Ruhestellung zeigt. Im Ausleger **8** ist ein Bolzen **19** angeordnet, den eine Öse an dem dem Tragelement **7** zugewandten Ende einer Zugfeder **18** umschlingt. Eine weitere Öse am dazu abgewandten Ende der Zugfeder **18** umschlingt einen an einem Drehelement **20** exzentrisch angeordneten bolzenförmigen Ansatz **20a**. Das Drehelement **20** ist rotationsfest mit der Aufnahme **9** verbunden. In der Arbeitsstellung übt die Zugkraft der Zugfeder **18** ein Drehmoment auf das Drehelement **20** und somit auf die Aufnahme **9** aus, wodurch das Nachtsichtgerät **2** (hier nicht dargestellt) gegen den Kopf des Benützers gedrückt wird. Der Bewegungsweg wird durch den Anschlag, der durch das Anschlagelement **13** zur Aufnahme **9** (**Fig. 4** und **Fig. 9**) gebildet wird, begrenzt. Durch - beispielsweise - drehendes Verstellen des Anschlagelements **13** in seiner - beispielsweise ein Gewinde aufweisenden - Halterung **13b** wird die Länge des aus der Halterung **13b** herausragenden Endes **13a** verändert, und damit die Endstellung der Aufnahme **9** in Arbeitsstellung bestimmt. Dadurch ist nicht allein eine Begrenzung des Schwenkweges aus der Ruhestellung gegeben, sondern es ist gleichzeitig auch eine in horizontaler Richtung leicht gekippte Stellung des Okulars des Sichtgerätes in Bezug auf das Auge des Benutzers einstellbar.

Alle Spiele im Bereich der Lagerung **33a, 33b, 33c** (**Fig. 8**) um die Drehachse **20c** werden durch die Federkraft der Zugfeder **18** vorgespannt, wodurch die Spiele auch bei Erschütterungen für den Benützer praktisch nicht merkbar werden. Wird das Nachtsichtgerät nach oben zur Ruhestellung hin bewegt, wird die Feder **18** gespannt. Im Bereich der Ruhestellung wird durch die Zugkraft der Feder **18** und die exzentrische Anordnung des Bolzenansatzes **20a** auf dem Drehelement **20** dieser in Richtung Ruhestellung bewegt und in dieser festgehalten. Die Ruhestellung ist ebenfalls durch einen Anschlag, im dargestellten Beispiel zwischen zweitem Einstellelement **11** und Spannschraube für die Seitenverstellung **14,** definiert. Die geeignete Auslegung des Excenters auf dem Drehelement **20** und der Federkraft vermag zumindest einen Teil des Gewichtes des Nachtsichtgerätes auszugleichen.

**Fig. 5** zeigt die im zweiten, die horizontale Ausrichtung des Sichtgeräts bestimmende, Einstellelement **11** eingesetzte Steckbuchse **23,** die durch den Druckknopf **12** ver- und entriegelt werden kann und eine Druckfeder **22** (**Fig**. **6**), die den Druckknopf **12** in eine Ruhestellung drückt.

Aus **Fig. 5** ist die Führung des die Höhenverstellung des Sichtgeräts bewirkenden ersten Einstellelements **10** in Nuten **24** in der Aufnahme **9** und die Führung des ersten Einstellelements in Führungen **40**, die im ersten Einstellelement **10** vorgesehen sind, zu ersehen.

Eine Querversteifung **51** ist zwischen den Backen der ersten Einstellelements **10** angeordnet, wodurch sowohl eine Verstärkungsfunktion als auch eine Schutzfunktion gegen mögliches Eindringen von Schmutz gegeben ist, wenn das erste Einstellelement **10** nach unten bewegt wird. Eine Steckbuchse **23** ist für die elektrische und mechanische Verbindung zum anzudockenden Sichtgerät vorgesehen.

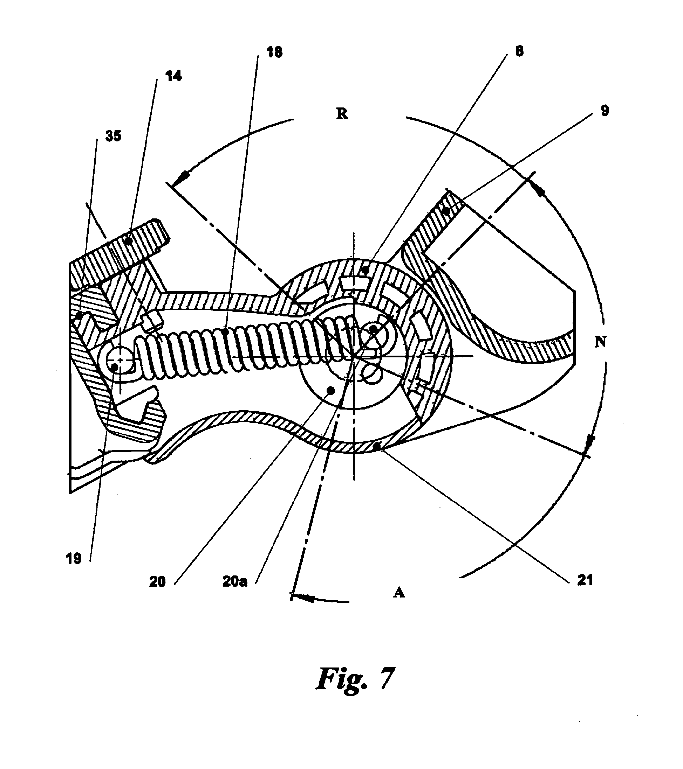

**Fig. 7** zeigt eine starke Vergrößerung des Schnittbildes im Bereich der Anordnung der Zugfeder **18** und stellt den Drehmomentverlauf bei der Bewegung zwischen Arbeits- und Ruhestellung dar. Im Bereich der Arbeitsstellung ist die Richtung des Drehmoments durch Pfeil **A**, im Bereich der Ruhestellung durch Pfeil **R**, in dem neutralen Bereich durch den Doppelpfeil **N** gekennzeichnet.

**Fig. 8** zeigt einen Schnitt durch die Aufnahme **9** von vorne in der Ebene der Schwenkachse. Auf dem Ausleger **8** wird die Aufnahme **9** über lagerstellen **33a, 33b, 33c** drehbar gelagert. Diese Lagerstellen sind in vorteilhafter Weise für eine geringst mögliche Belastung bei Betrieb mit Erschütterungen großflächig und auf großem Durchmesser angebracht. Zur Ermöglichung der Montage ist einseitig ein Gleitlager **31** eingesetzt. Das Drehelement **20** mit dem bolzenförmige Ansatz **20a** ist im Ausleger **8** drehbar gelagert und drehfest mit der Aufnahme **9** verbunden. So wird das durch die Zugfeder **18** erzeugte Drehmoment auf die Aufnahme **9** übertragen, wodurch der in **Fig. 7** dargestellte Drehmomentverlauf erzeugt wird. Die jeweils ausgedehnten Winkelstrecken, in denen das Drehmoment wirksam wird, bewirken, dass bei unbeabsichtigter Betätigung, wie beispielsweise durch Anstossen, das Nachtsichtgerät wieder in die vorherige Stellung zurückfedert.

In einer weiteren Ausführungsform ist ein Dämpfungselement eingesetzt, hier beispielhaft als hydraulischer Drehdämpfer **28** dargestellt. Die Kraftübertragung erfolgt einerseits vom Ausleger **8** über einen Mitnehmer **29** auf die Aussenseite des Dämpfungselements und andererseits von der Aufnahme **9** über eine Nocke **41** auf die Stirnseite des Drehdämpfers **28.** Durch den dynamischen Drehmomentwiderstand des Drehdämpfers **28** wird die Bewegungsgeschwindigkeit beim Wechseln der Stellung des Nachsichtgerätes **2** von der Ruhe- in die Arbeitsstellung reduziert, um beim Benützer Irritationen und Erschrecken zu vermeiden.

Zum Schutz gegen Verschmutzung sind der Ausleger **8** und die Aufnahme **9** rundum geschlossen. Zur Ermöglichung und/oder Vereinfachung der Montage sind Öffnungen durch einen oder mehrere Abdeckungen, so eine Abdeckung **21** für den Ausleger **8** (s. **Fig. 6**), bzw. eine dem Drehelement **20** zugeordneten Abdeckung **30,** geschlossen.

**Fig. 9** zeigt die justierende Wirkungsweise des Anschlagelements **13**. Dieses Bedienungselement ist in der am Ausleger **8** angeordneten Halterung **13b** eingeschraubt und kann vom Benützer im Rahmen eines Anschlagverstellweges **42** gedreht werden. Durch das Hinein- oder Herausdrehen dieses Anschlagelements **13** wird die Aufnahme **9**, die das in **Fig. 1** dargestellte Okular **3** des Nachtsichtgerätes **2** trägt, in der Arbeitsstellung geringfügig verdreht, wodurch sich in Folge der Augenabstand zum Okular verändert. Damit ist es dem Benützer sehr einfach auch einhändig möglich, eine Feinkorrektur der Okularposition durchzuführen.

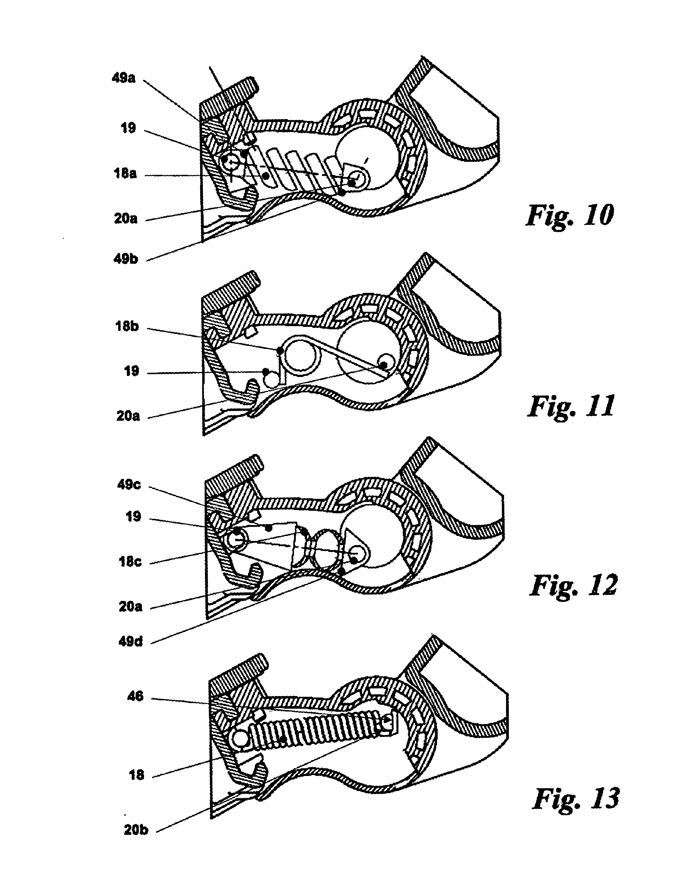

**Fig. 10** zeigt in einer weiteren Ausführungsform die alternative Verwendung einer Druckfeder **18a** anstelle der oben beschriebenen Zugfeder, welche zwischen dem Bolzen **19** und dem Bolzenansatz **20a** des Drehelements **20** auf geeigneten Stützvorrichtungen **49a** und **49b** lagert und die Drehmomente gemäß **Fig. 7** erwirkt.

**Fig. 11** zeigt in einer weiteren Ausführungsform die alternative Verwendung einer Schenkelfeder **18b**, die über die Schenkel zwischen einem Anschlag oder Bolzen **19** und dem Bolzenansatz **20a** des Drehelements **20** wirkt und die Drehmomente gemäß **Fig. 7** erwirkt.

**Fig. 12** zeigt in einer weiteren Ausführungsform die alternative Verwendung eines Tellerfederpaketes **18c**, das zwischen dem Bolzen **19** und dem Bolzenansatz **20a** des Drehtellers **20** auf Stützvorrichtungen **49c** und **49d** lagert und die Drehmomente gemäß **Fig. 7** erwirkt.

**Fig. 13** zeigt in einer weiteren, alternativen Ausführungsform einen Bolzenansatz **20b**, hier beispielhaft mit einer Kulissen-artigen Eingriffsfläche **46** für die Feder **18** ausgebildet. Dadurch kann der Verlauf des Drehmomentes und der Gewichtsausgleich des Sichtgerätes in vorteilhafter Weise verschiedenen Gewichten und Schwerpunkten angepasst werden.

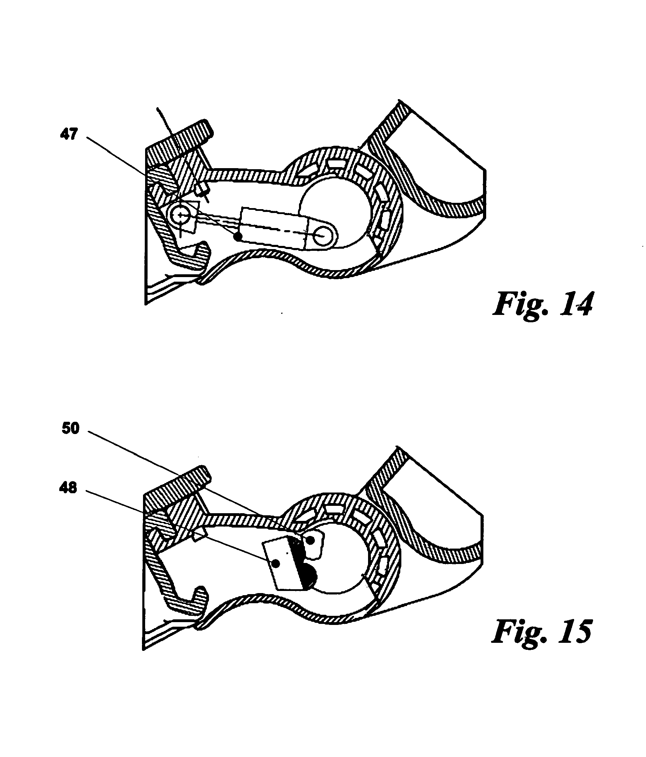

**Fig. 14** zeigt eine weitere Ausführungsform mit einem als Lineardämpfer **47** ausgebildeten Dämpfungselement. Damit wird die Geschwindigkeit in zumindest einer Bewegungsrichtung des Sichtgeräts reduziert. Der Lineardämpfer kann als Gasdruckfeder, als Luftzylinder oder hydraulischer Stoßdämpfer ausgeführt sein. Das Dämpfungselement wird zusätzlich zur Feder vorgesehen, in einer Ebene im Wesentlichen parallel zur Anordnung einer der oben beschriebenen Federn **18** bis **18c**.

**Fig. 15** zeigt in einer weiteren Ausführungsform ein als Endlagendämpfer **48** ausgebildetes Dämpfungselement, wodurch die Reduktion der Geschwindigkeit des Sichtgeräts zumindest in einer Bewegungsrichtung in der Endlage bewirkt wird. Der Endlagendämpfer kann als Puffer aus elastischem Material ausgeführt sein. Dieses Dämpfungselement wird zusätzlich zur Feder vorgesehen, und liegt in einer im Wesentlichen parallel zu einer durch die Anordnung der Federn **18** bis **18c** bestimmten Ebene.

## Patentansprüche

1. Halterung zur Befestigung zumindest eines Sichtgerätes, insbesondere eines Nachtsichtgerätes (2), auf einer Kopfbedeckung, wie einem Helm (5), eines Benutzers (1), mit
- einem am Helm (5) mittel- oder unmittelbar befestigbaren Tragelement (7)
- einem dem Tragelement (7) zugeordneten Ausleger (8), wobei eine Aufnahme (9) für das Sichtgerät um den Ausleger (8) schwenkbar angeordnet ist, somit eine Schwenkbewegung des Sichtgerätes zwischen einer Arbeits- und einer Ruhestellung ermöglichend,
wobei dem Ausleger (8) ein mit der Aufnahme (9) drehfest verbundenes Drehelement (20) zugeordnet ist, wobei eine Feder (18) solcherart an dem Drehelement (20) angeordnet ist, dass die Aufnahme (9) sowohl in der Arbeits- als auch in der Ruhestellung unter Federkraft steht,
**dadurch gekennzeichnet, dass**
die Feder (18) einenends an dem Drehelement (20) exzentrisch zu einer Drehachse (20c), um welche die Schwenkbewegung erfolgt, festgelegt ist.

2. Halterung nach Anspruch 1, mit einem Anschlagelement (13), über das die Position des Sichtgerätes in Arbeitsstellung definiert einstell- und festlegbar ist.

3. Halterung nach einem der vorhergehenden Ansprüche, **dadurch gekennzeichnet, dass** die Feder als Zug-, Druck oder Schenkelfeder ausgebildet ist.

4. Halterung nach einem der vorhergehenden Ansprüche, **dadurch gekennzeichnet, dass** an dem Drehelement eine Kulissen-artige Eingriffsfläche (46) für die Feder (18) vorgesehen ist.

5. Halterung nach einem der vorhergehenden Ansprüche, **dadurch gekennzeichnet, dass** dem Drehelement (20) ein Dämpfungselement (28,47,48) solcherart zugeordnet ist, dass bei Bewegung des Sichtgeräts
- wenigstens bei Bewegung aus der Ruhe- in die Arbeitsstellung - die Bewegungsgeschwindigkeit wenigstens über einen Teilbereich der Bewegung reduziert wird.

6. Halterung nach Anspruch 5, **dadurch gekennzeichnet, dass** das, vorzugsweise als Lineardämpfer (47) ausgebildete, Dämpfungselement einenends an dem Drehelement (20) exzentrisch zu einer Drehachse (20c), um welche die Schwenkbewegung erfolgt, festgelegt ist.

7. Halterung nach Anspruch 6, **dadurch gekennzeichnet, dass** das Dämpfungselement als Gasdruckfeder, Luftzylinder oder als hydraulischer Stossdämpfer ausgebildet ist.

8. Halterung nach Anspruch 5, **dadurch gekennzeichnet, dass** das Dämpfungselement (48) mit einem wenigstens einer Endlage der Bewegung des Sichtgeräts entsprechenden Begrenzungs-Anschlag (50) in Wirkverbindung bringbar ist, wobei der Begrenzungs-Anschlag (50) exzentrisch zu einer Drehachse (20c), um welche die Schwenkbewegung erfolgt, an dem Drehelement (20) angeordnet ist.

9. Halterung nach einem der vorhergehenden Ansprüche, **dadurch gekennzeichnet, dass** der Ausleger (8) verschiebbar in dem Tragelement (7) angeordnet und an beliebig wählbarer Position lösbar fixiert werden kann.

10. Halterung nach einem der vorhergehenden Ansprüche, **dadurch gekennzeichnet, dass** das Tragelement (7) zur Aufnahme zweier Sichtgeräte vorgesehen ist.

11. Halterung nach einem der vorhergehenden Ansprüche, **dadurch gekennzeichnet, dass** die Aufnahme (9) für das Sichtgerät ein erstes Einstellelement (10) zur vertikalen Positionierung des Sichtgeräts in Bezug auf die Augenlage eines den Helm (5) tragenden Benutzers (1) und insbesondere ein zweites Einstellelement (11) zur horizontalen Positionierung des Sichtgeräts in Bezug auf die Augenlage des den Helm (5) tragenden Benutzers (1) aufweist.

12. Halterung nach Anspruch 11, **dadurch gekennzeichnet, dass** das erste Einstellelement (10) als - insbesondere innerhalb der Aufnahme (9) - beweglicher, und an beliebiger Position feststellbarer - insbesondere U-förmiger - Schlitten ausgebildet ist.

13. Halterung nach Anspruch 11, **dadurch gekennzeichnet, dass** das zweite Einstellelement (11) als beweglicher, und an beliebiger Position feststellbarer - insbesondere innerhalb des ersten Einstellelements (11) beweglicher - Schlitten ausgebildet ist.

14. Halterung nach einem der Ansprüche 11 bis 13, **dadurch gekennzeichnet, dass** an einem der beiden Einstellelemente (10, 11), vorzugsweise am zweiten Einstellelement (11), ein Ankoppel-Teil (23) für das lösbare Fixieren des Sichtgeräts vorgesehen ist.

## Claims

1. Mount for fixing at least one vision device, in particular a night vision device (2), on a head covering, such as a helmet (5), of a user (1), comprising
- a support element (7) which can be fastened indirectly or directly to the helmet (5),
- a bracket (8) coordinated with the support element (7), a receptacle (9) for the vision device being arranged so as to be pivotable about the bracket (8), thus permitting a pivot movement of the vision device between a working position and a rest position,
- a rotary element (20) nonrotatably connected to the receptacle (9) being coordinated with the bracket (8), a spring (18) being arranged on the rotary element (20) in such a way that the receptacle (9) is under spring force both in the working position and in the rest position,
**characterized in that**
the spring (18) is fixed at one end to the rotary element (20) eccentrically to an axis (20c) of rotation about which the pivot movement takes place.

2. Mount according to Claim 1, comprising a stop element (13) via which the position of the vision device in the working position can be set and fixed in a defined manner.

3. Mount according to either of the preceding claims, **characterized in that** the spring is in the form of a tension, pressure or leg spring.

4. Mount according to any of the preceding claims, **characterized in that** a link-like engaging surface (46) for the spring (18) is provided on the rotary element.

5. Mount according to any of the preceding claims, **characterized in that** a damping element (28, 47, 48) is coordinated with the rotary element (20) in such a way that, on movement of the vision device, at least on movement from the rest position to the working position, the speed of movement is reduced at least over a part of the movement.

6. Mount according to Claim 5, **characterized in that** the damping element, preferably in the form of a linear damper (47), is fixed at one end to the rotary element (20) eccentrically to the axis (20c) of rotation about which the pivot movement takes place.

7. Mount according to Claim 6, **characterized in that** the damping element is in the form of a pneumatic spring, a pneumatic cylinder or a hydraulic shock absorber.

8. Mount according to Claim 5, **characterized in that** the damping element (48) can be brought into an operative connection to a limiting stop (50) corresponding to at least one end position of the movement of the vision device, the limiting stop (50) being arranged on the rotary element (20) eccentrically to an axis (20c) of rotation about which the pivot movement takes place.

9. Mount according to any of the preceding claims, **characterized in that** the bracket (8) can be arranged so as to be displaceable in the support element (7) and can be detachably fixed in any selectable position.

10. Mount according to any of the preceding claims, **characterized in that** the support element (7) is provided for holding two vision devices.

11. Mount according to any of the preceding claims, **characterized in that** the receptacle (9) for the vision device has a first adjustment element (10) for vertical positioning of the vision device relative to the eye position of a user (1) wearing the helmet (5) and in particular a second adjustment element (11) for horizontal positioning of the vision device relative to the eye position of the user (1) wearing the helmet (5).

12. Mount according to Claim 11, **characterized in that** the first adjustment element (10) is in the form of a carriage, in particular a U-shaped carriage, in particular moveable within the receptacle (9) and fixable in any position.

13. Mount according to Claim 11, **characterized in that** the second adjustment element (11) is in the form of a carriage which is moveable and fixable in any position, in particular moveable within the first adjustment element (11).

14. Mount according to any of Claims 11 to 13, **characterized in that** a coupling part (23) for detachably fixing the vision device is provided on one of the two adjustment elements (10, 11), preferably on the second adjustment element (11).

## Revendications

1. Support pour la fixation au moins d'un dispositif de vision, en particulier d'un dispositif de vision nocturne (2), sur un couvre-chef, tel qu'un casque (5), d'un utilisateur (1), avec :
- un élément support (7), susceptible d'être fixé, indirectement ou directement au casque (5),
- un bras articulé (8) associé à l'élément support (7), un logement (9) pour le dispositif de vision étant disposé de façon à pouvoir pivoter autour du bras articulé (8), permettant ainsi un mouvement de pivotement du dispositif de vision, entre une position de travail et une position de repos,
un élément rotatif (20), relié de façon assujettie en rotation au logement (9), étant associé au bras articulé (8), un ressort (18) étant disposé sur l'élément rotatif (20) de manière que le logement (9) soit placé sous l'effet d'une force élastique, tant dans la position de travail que dans la position de repos,
**caractérisé en ce que**
le ressort est fixé, à une extrémité, sur l'élément rotatif (20), de manière excentrique par rapport à un axe de rotation (20c) autour duquel s'effectue de mouvement de pivotement.

2. Support selon la revendication 1, avec un élément formant butée (13), par l'intermédiaire duquel la position du dispositif de vision peut être réglée et fixée, de façon définie, en position de travail.

3. Support selon l'une des revendications précédentes, **caractérisé en ce que** le ressort est réalisé sous forme de ressort de traction, de compression ou de torsion.

4. Support selon l'une des revendications précédentes, **caractérisé en ce qu'**une surface d'engagement (46), du genre de coulisse, pour le ressort (18) est prévue sur l'élément rotatif.

5. Support selon l'une des revendications précédentes, **caractérisé en ce qu'**un élément d'amortissement (28, 47, 48) est associé à l'élément rotatif (20), de manière que, en cas de déplacement du dispositif de vision - au moins en cas de déplacement de la position de repos à la position de travail - la vitesse de déplacement soit réduite, au moins sur une zone partielle du déplacement.

6. Support selon la revendication 5, **caractérisé en ce que** l'élément d'amortissement, de préférence réalisé sous la forme d'amortisseur linéaire (47), soit fixé à une extrémité sur l'élément rotatif (20), de manière excentrique par rapport à un axe de rotation (20c) autour duquel s'effectue le mouvement de pivotement.

7. Support selon la revendication 6, **caractérisé en ce que** l'élément d'amortissement est réalisé sous forme de ressort à pression de gaz, de vérin pneumatique ou d'amortisseur hydraulique.

8. Support selon la revendication 5, **caractérisé en ce que** l'élément d'amortissement (48) est susceptible d'être mis en liaison active avec une butée de limitation (50) correspondant au moins à une position finale du déplacement du dispositif de vision, la butée de limitation (50) étant disposée sur l'élément rotatif (20), de manière excentrique par rapport à un axe de rotation (20c), autour duquel s'effectue le mouvement pivotant.

9. Support selon l'une des revendications précédentes, **caractérisé en ce que** le bras articulé (8) est disposé de façon coulissante dans l'élément support (7) et peut être fixé de façon désolidarisable en une position pouvant être choisie de façon quelconque.

10. Support selon l'une des revendications précédentes, **caractérisé en ce que** l'élément support (7) est prévu pour recevoir deux dispositifs de vision.

11. Support selon l'une des revendications précédentes, **caractérisé en ce que** le logement (9) pour le dispositif de vision présente un premier élément de réglage (10), pour le positionnement vertical du dispositif de vision par rapport à la position de l'oeil d'un utilisateur (1) portant le casque (5), et en particulier un deuxième élément de réglage (11) pour le positionnement horizontal du dispositif de vision par rapport à la position de l'oeil de utilisateur (1) portant le casque (5).

12. Support selon la revendication 11, **caractérisé en ce que** le premier élément de réglage (10) est réalisé sous forme de chariot - en particulier en forme de U - mobile - en particulier à l'intérieur du logement (9) - et susceptible d'être fixé en une position quelconque.

13. Support selon la revendication 11, **caractérisé en ce que** le deuxième élément de réglage (11) est réalisé sous forme de chariot mobile - en particulier mobile à l'intérieur du premier élément de réglage (10) - et susceptible d'être fixé en une position quelconque.

14. Support selon l'une des revendications 11 à 13, **caractérisé en ce qu'**une partie d'accouplement (23) pour la fixation désolidarisable du dispositif de vision est prévue sur l'un des deux éléments de réglage (10, 11), de préférence sur le deuxième élément de réglage (11).
